# EUROPÄISCHE PATENTSCHRIFT

(11) **EP 3 123 043 B1**
(45) Veröffentlichungstag und Bekanntmachung des Hinweises auf die Patenterteilung: **14.11.2018**
(21) Anmeldenummer: 15731501.1
(22) Anmeldetag: 26.03.2015
(51) Int. Cl.: F16D 13/38, F16D 21/06

(54) **MEHRSCHEIBENDOPPELKUPPLUNG**
MULTI-DISK DUAL CLUTCH
DOUBLE EMBRAYAGE À DISQUES MULTIPLES

(30) Priorität: 27.03.2014 DE 102014205773; 04.04.2014 DE 102014206553; 27.06.2014 DE 102014212504
(43) Veröffentlichungstag der Anmeldung: 01.02.2017
(73) Patentinhaber: Schaeffler Technologies AG & Co. KG, 91074 Herzogenaurach (DE)
(72) Erfinder: REIMNITZ, Dirk, 77815 Bühl (DE); HURLE, Thomas, 77830 Bühlertal (DE)
(86) Internationale Anmeldenummer: PCT/DE2015/200200
(87) Internationale Veröffentlichungsnummer: WO 2015/144171

(56) Entgegenhaltungen:
- WO-A1-03/081065
- DE-A1-102013 200 408
- US-A1- 2010 133 056

## Beschreibung

Die Erfindung betrifft eine Mehrscheibendoppelkupplung mit deren Hilfe eine Antriebswelle eines Kraftfahrzeugmotors über eine erste Mehrscheibenkupplung, insbesondere Zweischeibenkupplung, und/oder eine zweite Mehrscheibenkupplung, insbesondere Zweischeibenkupplung, mit mindestens einer ersten Getriebeeingangswelle beziehungsweise einer zweiten Getriebeeingangswelle gekuppelt werden kann.

Trockene Doppelkupplung verfügen nach derzeitigem Stand der Technik meist über eine Scheibe je Teilkupplung. Diese Scheiben besitzen je zwei Reibflächen mit denen sie an ihren Nachbarbauteilen (z.B. Anpressplatte und Zentralpatte oder Gegenplatte) anliegen, wenn sie zur Momentenübertragung von der Kupplung eingespannt werden, und bilden so mit der Kupplung zwei Reibstellen aus. Das übertragbare Moment einer Kupplung lässt sich auch bei gleicher Anpresskraft, gleichem Durchmesser und gleichen Reibverhältnissen (Reibwert) steigern, indem man die Anzahl der Reibstellen erhöht. Dieses Prinzip wird häufig bei Lamellenkupplungen eingesetzt, wie sie beispielsweise auch bei nasslaufenden Doppelkupplungen verwendet werden. Als trockenlaufende Kupplungen sind Lamellenkupplungen für Fahrzeuganwendungen meist ungeeignet. Ohne Öl, das die Kupplung kühlt, überhitzen die dünnen Lamellen schnell, da sie zu wenig Wärmekapazität aufweisen. Außerdem lüften Lamellenkupplungen meist nicht richtig, wenn die Reibstellen zwischen den Lamellen und den Lamellenträgern nicht durch das Öl geschmiert werden. Um die Vorteile vieler Reibstellen pro Kupplung auch bei trockenlaufenden Doppelkupplungen nutzen zu können, gibt es mittlerweile Erfindungen, die einen Weg aufzeigen zwei oder mehr Scheiben in eine Teilkupplung zu integrieren und dies mit für Trockenkupplungen bewährten Teilen und Funktionsprinzipien realisieren.

Aus DE 10 2011 0185 589 A1 ist eine Zweischeibenkupplung bekannt, bei der eine Anpressplatte und eine Zwischenplatte jeweils über eine Blattfeder mit einer Gegenplatte verbunden sind. Bei einer axialen Verlagerung der Anpressplatte relativ zur Gegenplatte aus einer geöffneten Stellung der Zweischeibenkupplung heraus in eine geschlossene Stellung der Zweischeibenkupplung werden zwischen der Gegenplatte und der Zwischenplatte einerseits und zwischen der Zwischenplatte und der Anpressplatte andererseits vorgesehene Reibbeläge einer Kupplungsscheibe reibschlüssig verpresst.
Es besteht ein ständiges Bedürfnis im Antriebsstrang eines Kraftfahrzeugs mit Hilfe einer leicht montierbaren Reibungskupplung ein besonders hohes Drehmoment bei unterschiedlichen Bauformen des Antriebsstrangs übertragen zu können.

Andere Doppelkupplungen sind aus der WO 03/081065 A1; US 2010/0133056 A1 und der DE 10 2013 200 408 A1 bekannt. Es ist die Aufgabe der Erfindung Maßnahmen aufzuzeigen, die eine Übertragung eines besonders hohen Drehmoments bei unterschiedlichen Bauformen eines Antriebsstrangs eines Kraftfahrzeugs mit Hilfe einer leicht montierbaren Reibungskupplung ermöglichen.
Die Lösung der Aufgabe erfolgt erfindungsgemäß durch eine Mehrscheibendoppelkupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.
Erfindungsgemäß ist eine Mehrscheibendoppelkupplung zum Kuppeln einer Antriebswelle eines Kraftfahrzeugmotors mit einer ersten Getriebeeingangswelle und/oder einer zweiten Getriebeeingangswelle vorgesehen mit einer ersten Teilkupplung zum Kuppeln der Antriebswelle mit der ersten Getriebeeingangswelle, wobei die erste Teilkupplung eine erste Gegenplatte, mindestens eine über eine erste Zwischenplattenrückstellfeder mit der ersten Gegenplatte verbundene relativ zur ersten Gegenplatte axial verlagerbare erste Zwischenplatte und eine über eine erste Anpressplattenrückstellfeder mit der ersten Gegenplatte verbundene relativ zur ersten Gegenplatte und zur ersten Zwischenplatte axial verlagerbare erste Anpressplatte zum Verpressen von ersten Reibbelägen einer ersten Kupplungsscheibe zwischen der ersten Gegenplatte und der ersten Zwischenplatte sowie zwischen der ersten Zwischenplatte und der ersten Anpressplatte aufweist, einer zweiten Teilkupplung zum Kuppeln der Antriebswelle mit der zweiten Getriebeeingangswelle, wobei die zweite Teilkupplung eine zweite Gegenplatte, mindestens eine über eine zweite Zwischenplattenrückstellfeder mit der zweiten Gegenplatte verbundene relativ zur zweiten Gegenplatte axial verlagerbare zweite Zwischenplatte und eine über eine zweite Anpressplattenrückstellfeder mit der zweiten Gegenplatte verbundene relativ zur zweiten Gegenplatte und zur zweiten Zwischenplatte axial verlagerbare zweite Anpressplatte zum Verpressen von zweiten Reibbelägen einer zweiten Kupplungsscheibe zwischen der zweiten Gegenplatte und der zweiten Zwischenplatte sowie zwischen der zweiten Zwischenplatte und der zweiten Anpressplatte aufweist, und einem die erste Gegenplatte mit der zweiten Gegenplatte drehfest verbindenden Hauptverbindungselement, insbesondere Nietverbindung, wobei das Hauptverbindungselement zur ersten Anpressplattenrückstellfeder, zur ersten Zwischenplattenrückstellfeder, zur zweiten Anpressplattenrückstellfeder und zur zweiten Zwischenplattenrückstellfeder in Umfangsrichtung und/oder in radialer Richtung versetzt angeordnet ist.

Mit Hilfe der jeweiligen Zwischenplatte ist es möglich zwei weitere Reibflächen zum Verpressen von Reibbelägen der zugeordneten Kupplungsscheibe bereitzustellen, so dass sich mit der Zwischenplatte die Anzahl der Reibflächen der jeweiligen Teilkupplung entsprechend erhöhen lässt. Durch die erhöhte Anzahl der Reibflächen kann ein entsprechend erhöhtes Drehmoment übertragen werden. Zusätzlich oder alternativ kann die auf die jeweilige Anpressplatte aufzubringende Anpresskraft reduziert werden, um ein bestimmtes maximales Drehmoment noch übertragen zu können. Zusätzlich oder alternativ kann der Außenradius der Gegenplatte und/oder der Anpressplatte verringert werden, um ein bestimmtes maximales Drehmoment noch übertragen zu können. Durch den geringeren Außenradius kann das Massenträgheitsmoment der jeweiligen Teilkupplung reduziert werden und radial Bauraum eingespart werden. Durch das reduzierte Massenträgheitsmoment eignet sich die Mehrscheibendoppelkupplung insbesondere für Anwendungen mit einem sportlichen und/oder dynamischen Fahrverhalten und/oder zur Reduzierung eines Kraftstoffverbrauchs eines Kraftfahrzeugs. Gleichzeitig kann die Anpresskraft über ein der jeweiligen Anpressplatte zugeordnetes Betätigungselement, beispielsweise ein in der Art einer Tellerfeder ausgestaltetes Hebelelement, in die jeweilige Anpressplatte eingeleitet werden. Dadurch kann sich zwischen einem, insbesondere hydraulischen, Betätigungssystem zur Bereitstellung einer Betätigungskraft und der an dem Reibbelag der Kupplungsscheibe angreifenden Anpresskraft eine Hebelübersetzung ergeben, wodurch sich insbesondere die Betätigungskraft verstärken lässt. Dadurch braucht das Betätigungssystem für eine bestimmte Anpresskraft nur eine entsprechend geringere Betätigungskraft zu erzeugen, die vorzugsweise so gering ist, dass diese Betätigungskraft sogar von der Antriebswelle des Kraftfahrzeugmotors abgestützt werden kann. Dies ermöglicht zusätzliche konstruktive Freiheiten, die beispielsweise für eine verbesserte Montierbarkeit der Mehrscheibendoppelkupplung genutzt werden können. Durch die mit Hilfe des jeweiligen Betätigungselements betätigbare mindestens eine Zwischenplatte aufweisende Teilkupplung kann auch bei einer Reduzierung der zum Betätigen der Teilkupplung erforderlichen Betätigungskraft die Anzahl der effektiven Reibflächen erhöht werden, so dass bei geringen auftretenden Kräften eine Übertragung von großen Drehmomenten in einem Antriebsstrang eines Kraftfahrzeugs ermöglicht ist.

Dadurch, dass das zum Verbinden der beiden Gegenplatten der Teilkupplungen vorgesehene Hauptverbindungselement nicht in axialer Richtung von einer der, insbesondere als Blattfeder ausgestalteten, Rückstellfedern der Teilkupplungen verdeckt ist, sondern zu den Rückstellfedern der Teilkupplungen versetzt angeordnet ist, ist es möglich die Teilkupplungen als vormontierte Baueinheiten in der Mehrscheibendoppelkupplung zu verbauen. Dadurch kann die Mehrscheibendoppelkupplung montiert werden, indem die beiden Teilkupplungen mit Hilfe des mindestens einen Hauptverbindungselements an einer oder vorzugsweise mehreren Hauptverbindungsstellen miteinander direkt oder indirekt, beispielsweise über ein eine axiale Distanz überbrückendes Zwischenstück, verbunden werden. Die Montage der Mehrscheibendoppelkupplung ist dadurch vereinfacht. Durch das zu den mehreren Rückstellfedern der jeweiligen als Mehrscheibenkupplung ausgestalteten Teilkupplungen versetzt angeordnete Hauptverbindungselement ist eine Übertragung eines besonders hohen Drehmoments bei unterschiedlichen Bauformen eines Antriebsstrangs eines Kraftfahrzeugs mit Hilfe einer leicht montierbaren Reibungskupplung ermöglicht.

Die jeweilige Kupplungsscheibe kann zwischen den aufeinander zu weisenden Platten der zugeordneten Teilkupplung, insbesondere an voneinander wegweisenden axialen Stirnflächen eine Belagfederung aufweisen, über die jeweils ein Reibbelag mit der Kupplungsscheibe verbunden ist, wobei der jeweilige Reibbelag mit der zugehörigen Gegenplatte und/oder Anpressplatte und/oder Zwischenplatte reibschlüssig in Kontakt kommen kann, um die jeweilige Teilkupplung zu schließen. Der zwischen der Gegenplatte und der Zwischenplatte vorgesehene Reibbelag und der zwischen der Zwischenplatte und der Anpressplatte vorgesehene Reibbelag können in axialer Richtung relativ zueinander bewegbar sein, wobei es möglich ist, das der eine Reibbelag in axialer Richtung unbeweglich und der andere Reibbelag in axialer Richtung verschiebbar an der Kupplungsscheibe angebunden ist. Die jeweilige Kupplungsscheibe kann über eine Verzahnung mit der jeweiligen Getriebeeingangswelle drehfest, aber axial beweglich verbunden sein. Die Mehrscheibendoppelkupplung kann insbesondere mit einem motorseitig vorgelagerten und/oder getriebeseitig nachgelagerten Drehschwingungsdämpfer, insbesondere Zweimassenschwungrad und/oder Fliehkraftpendel und/oder Massependel, direkt oder indirekt verbunden sein. Insbesondere kann das Fliehkraftpendel und/oder ein Massependel direkt in die Kupplung integriert und/oder an ihr befestigt sein. Ferner kann die jeweilige Kupplungsscheibe insbesondere mit Hilfe eines Scheibendämpfers gedämpft sein. Die Mehrscheibendoppelkupplung kann insbesondere über eine starre Scheibe ("Driveplate") und/oder eine biegbare und/oder in axialer Richtung flexible Scheibe ("Flexplate") mit der Antriebswelle verbunden sein, wobei die Scheibe Drehmomente übertragen kann, um in die Doppelkupplung das Drehmoment der Antriebswelle einleiten zu können. Durch die flexible Ausgestaltung der Scheibe können auftretende Schwingungen ganz oder teilweise gedämpft oder getilgt werden. Zusätzlich oder alternativ kann die Mehrscheibendoppelkupplung über mindestens ein Federelement, insbesondere Blattfeder, mit der Antriebswelle verbunden sein. Das Federelement kann insbesondere Axialschwingung dämpfen und/oder ein Taumeln der Antriebswelle ausgleichen und dabei gleichzeitig ein Drehmoment übertragen.

Die erste Gegenplatte und die zweite Gegenplatte können als voneinander verschiedene separate Bauteile ausgestaltet sein. Insbesondere ist genau eine erste Zwischenplatte oder es sind genau zwei erste Zwischenplatten oder genau drei erste Zwischenplatten vorgesehen. Vorzugsweise ist genau eine zweite Zwischenplatte oder es sind genau zwei zweite Zwischenplatten oder genau drei zweite Zwischenplatten vorgesehen. Bei jeweils einer Zwischenplatte und getrennt vorgesehenen Gegenplatten ergibt sich eine Doppelkupplung nach dem "sechs-Platten-Design Bei jeweils zwei Zwischenplatten und getrennt vorgesehenen Gegenplatten ergibt sich eine Doppelkupplung nach dem "acht-Platten-Design". Vorzugsweise sind die erste Getriebeeingangswelle und die zweite Getriebeeingangswelle koaxial zueinander angeordnet. Insbesondere ist die innere Getriebeeingangswelle, insbesondere die erste Getriebeeingangswelle, an der Antriebswelle gelagert. Vorzugsweise weist die Antriebswelle an einer axialen Stirnseite eine Vertiefung auf, in welche die innere Getriebeeingangswelle teilweise hineinragt und beispielsweise über ein Pilotlager an der Antriebswelle gelagert sein kann.

Es ist insbesondere ein erstes Betätigungselement zum Verlagern der ersten Anpressplatte und ein zweites Betätigungselement zum Verlagern der zweiten Anpressplatte vorgesehen. Das Betätigungselement kann insbesondere als Hebelfeder ausgestaltetes sein, die bei Einleitung einer Betätigungskraft elastisch verbogen werden kann. Das Betätigungselement kann beispielsweise in der Art einer Tellerfeder ausgestaltet sein. Das Betätigungselement kann einen ringförmig in Umfangsrichtung umlaufenden Tellerfederkörper aufweisen, dessen Konizität sich bei einem Schwenken des Betätigungselements um einen in Umfangsrichtung verlaufenden Schwenkpunkt verändern kann. Von dem Tellerfederkörper können Federzungen nach radial innen abstehen, so dass an einem radial inneren Ende der Federzungen die Betätigungskraft eingeleitet werden kann. Die Betätigungskraft kann von einem insbesondere hydraulischen Betätigungssystem aufgebracht werden, das insbesondere einen ersten Ringzylinder zum Verschwenken des ersten Betätigungselements mit Hilfe eines in dem ersten Ringzylinder axial geführten ersten Betätigungskolbens und einen konzentrisch zum ersten Ringzylinder vorgesehenen zweiten Ringzylinder zum Verschwenken des zweiten Betätigungselements mit Hilfe eines in dem zweiten Ringzylinder axial geführten zweiten Betätigungskolbens aufweist. Zwischen dem ersten Betätigungskolben und dem ersten Betätigungselement kann ein erstes Ausrücklager und zwischen dem zweiten Betätigungskolben und dem zweiten Betätigungselement ein zweites Ausrücklager angeordnet sein. Besonders bevorzugt ist eine erste Nachstelleinrichtung zum Nachstellen eines verschleißbedingten Fehlabstands der ersten Anpressplatte zur ersten Gegenplatte und/oder eine zweite Nachstelleinrichtung zum Nachstellen eines verschleißbedingten Fehlabstands der zweiten Anpressplatte zur zweiten Gegenplatte vorgesehen. Die jeweilige Nachstelleinrichtung kann insbesondere zwischen dem zugeordnetem Betätigungselement und einem Kupplungsdeckel der zugeordneten Teilkupplung oder zwischen dem zugeordnetem Betätigungselement und der zugeordneten Anpressplatte vorgesehen sein. Die jeweilige Nachstelleinrichtung weist insbesondere einen in Umfangsrichtung vorgespannten Nachstellring auf, der Teil eines Rampensystems ist und bei einem hinreichend großen Hubweg der nachzustellenden Anpressplatte sich verdrehen kann, um einen ursprünglichen Hubweg der Anpressplatte nachstellen zu können. Zusätzlich oder alternativ kann ein Nachstellen eines verschleißbedingten Fehlabstands auch durch einen mitwandernden Anschlag des Betätigungssystems realisiert werden. Der mitwandernde Anschlag kann bei einem entsprechend großen Ausrückweg des jeweiligen Betätigungskolben mitgenommen werden und dadurch bei einem Nachlassen der aufgebauten Betätigungskraft den Betätigungskolben nur um eine entsprechend geringere Wegstreckt in den zugeordneten Ringzylinder einfahren lassen, so dass bei einer erneuten Betätigung der Betätigungskolben um eine entsprechend geringere Wegstrecke ausgefahren werden muss.

Insbesondere sind die erste Anpressplattenrückstellfeder und die zweite Anpressplattenrückstellfeder im Wesentlichen vollständig oder teilweise und/oder die erste Zwischenplattenrückstellfeder und die zweite Zwischenplattenrückstellfeder im Wesentlichen vollständig oder teilweise in axialer Richtung hintereinander angeordnet. Es ist möglich, dass das aus der ersten Anpressplattenrückstellfeder und der zweite Anpressplattenrückstellfeder zusammengesetzte Federpaket und das aus der ersten Zwischenplattenrückstellfeder und der zweiten Zwischenplattenrückstellfeder zusammengesetzte Federpaket im Wesentlichen vollständig oder teilweise in axialer Richtung hintereinander angeordnet sind oder vollständig in Umfangsrichtung zueinander versetzt angeordnet sind. Die zumindest teilweise hintereinander angeordneten Rückstellfedern können in Umfangsrichtung an hinreichend vielen Stellen Bereiche vorsehen, in denen keine Rückstellfedern angeordnet sind und in denen das Hauptverbindungselement und/oder andere Bauteile der Mehrscheibendoppelkupplung und/oder des Antriebstrangs des Kraftfahrzeugs vorgesehen werden können. Da die Zwischenplattenrückstellfedern einen geringeren maximalen axialen Betätigungsweg als die Anpressplattenrückstellfeder überstreichen, können die Zwischenplattenrückstellfedern kürzer ausgeführt werden als die Anpressplattenrückstellfedern. Indem die kurzen Zwischenplattenrückstellfedern und die langen Anpressplattenrückstellfedern axial voreinander angeordnet werden können lässt sich der Bauraum in Umfangsrichtung besonders effizient nutzen, beispielsweise zur Schaffung von genügend Bauraum für die Hauptbefestigungselemente.

Vorzugsweise sind die erste Anpressplattenrückstellfeder und die zweite Zwischenplattenrückstellfeder im Wesentlichen vollständig oder teilweise und/oder die zweite Anpressplattenrückstellfeder und die erste Zwischenplattenrückstellfeder im Wesentlichen vollständig oder teilweise in axialer Richtung hintereinander angeordnet. Es ist möglich, dass das aus der ersten Anpressplattenrückstellfeder und der zweiten Zwischenplattenrückstellfeder zusammengesetzte Federpaket und das aus der zweiten Anpressplattenrückstellfeder und der ersten Zwischenplattenrückstellfeder zusammengesetzte Federpaket im Wesentlichen vollständig oder teilweise in axialer Richtung hintereinander angeordnet sind oder vollständig in Umfangsrichtung zueinander versetzt angeordnet sind. Die zumindest teilweise hintereinander angeordneten Rückstellfedern können in Umfangsrichtung an hinreichend vielen Stellen Bereiche vorsehen, in denen keine Rückstellfedern angeordnet sind und in denen das Hauptverbindungselement und/oder andere Bauteile der Mehrscheibendoppelkupplung und/oder des Antriebstrangs des Kraftfahrzeugs vorgesehen werden können. Die Rückstellfedern der Teilkupplungen können dadurch wechselseitig verschachtelt angeordnet werden, so dass der gemeinsame Bauraumbedarf in Umfangsrichtung gering gehalten ist. Da die Zwischenplattenrückstellfedern einen geringeren maximalen axialen Betätigungsweg als die Anpressplattenrückstellfedern überstreichen und nur an den Anpressplattenrückstellfedern Abstützelemente für die Zwischenplatten benötigt werden, benötigen die aus einer Anpressplattenrückstellfeder und einer Zwischenplattenrückstellfeder zusammengesetzten Federpakete weniger axialen Bauraum als ein Federpaket, das aus zwei Anpressplattenrückstellfedern zusammengesetzt ist. Dadurch kann durch die wechselseitige Anordnung der axiale bauraumbedarf der Mehrscheibendoppelkupplung radial außen reduziert werden.

Besonders bevorzugt sind die erste Anpressplattenrückstellfeder und die erste Zwischenplattenrückstellfeder im Wesentlichen vollständig oder teilweise und/oder die zweite Anpressplattenrückstellfeder und die zweite Zwischenplattenrückstellfeder im Wesentlichen vollständig oder teilweise in axialer Richtung hintereinander angeordnet. Es ist möglich, dass das aus der ersten Anpressplattenrückstellfeder und der ersten Zwischenplattenrückstellfeder zusammengesetzte Federpaket und das aus der zweiten Anpressplattenrückstellfeder und der zweiten Zwischenplattenrückstellfeder zusammengesetzte Federpaket im Wesentlichen vollständig oder teilweise in axialer Richtung hintereinander angeordnet sind oder vollständig in Umfangsrichtung zueinander versetzt angeordnet sind. Die zumindest teilweise hintereinander angeordneten Rückstellfedern können in Umfangsrichtung an hinreichend vielen Stellen Bereiche vorsehen, in denen keine Rückstellfedern angeordnet sind und in denen das Hauptverbindungselement und/oder andere Bauteile der Mehrscheibendoppelkupplung und/oder des Antriebstrangs des Kraftfahrzeugs vorgesehen werden können. Die Rückstellfedern der ersten Teilkupplung und die Rückstellfedern der zweiten Teilkupplung können als jeweils gemeinsame Federpakete angeordnet werden, die auf einem geringen Bauraum leicht vormontiert werden können. Gleichzeitig kann der maximale axiale Bauraum der Gesamtheit der Rückstellfedern gering gehalten werden.

Insbesondere sind die erste Anpressplattenrückstellfeder, die erste Zwischenplattenrückstellfeder, die zweite Anpressplattenrückstellfeder und die zweite Zwischenplattenrückstellfeder im Wesentlichen vollständig oder teilweise in axialer Richtung hintereinander angeordnet. Die zumindest teilweise hintereinander angeordneten Rückstellfedern können in Umfangsrichtung an hinreichend vielen Stellen Bereiche vorsehen, in denen keine Rückstellfedern angeordnet sind und in denen das Hauptverbindungselement und/oder andere Bauteile der Mehrscheibendoppelkupplung und/oder des Antriebstrangs des Kraftfahrzeugs vorgesehen werden können. Dadurch, dass die verschiedenen Rückstellfedern in einem gemeinsamen Winkelbereich angeordnet sind, kann der Bauraumbedarf für die Rückstellfedern in Umfangsrichtung minimiert werden, so dass besonders viel Bauraum für andere Bauteile frei gehalten werden kann.

Vorzugsweise überdeckt eine der Rückstellfedern in axialer Richtung betrachtet mindestens eine andere Rückstellfeder im Wesentlichen vollständig und eine weitere andere Rückstellfeder nur teilweise. Dadurch kann ein besonders geringer Bauraumbedarf in Umfangsrichtung erreicht werden, wobei gleichzeitig die Verbindungsstellen der jeweiligen Rückstellfeder durch die zumindest leicht in Umfangsrichtung versetzte Anordnung leicht zugänglich sind und eine einfache Montage ermöglichen. Beispielsweise können dadurch für die jeweilige Teilkupplung zwei Verbindungsstellen von Rückstellfedern motorseitig und zwei andere Verbindungsstellen getriebeseitig leicht zugänglich sein, während im montierten Zustand der Teilkupplungen in der Mehrscheibendoppelkupplung die leicht zueinander versetzt angeordneten Rückstellfedern der jeweiligen Teilkupplungen in axialer Richtung hintereinander angeordnet sein können.

Besonders bevorzugt ist vorgesehen, dass die erste Zwischenplattenrückstellfeder mindestens eine insbesondere nach radial innen geöffnete erste Zwischenplattenrückstellfederverjüngung ausbildet, wobei ein an der ersten Anpressplattenrückstellfeder anschlagbares erstes Abstützelement der ersten Zwischenplatte und/oder ein an der zweiten Anpressplattenrückstellfeder anschlagbares zweites Abstützelement der zweiten Zwischenplatte zumindest teilweise in die erste Zwischenplattenrückstellfederverjüngung hinein verlagerbar ist, und/oder die zweite Zwischenplattenrückstellfeder mindestens eine insbesondere nach radial innen geöffnete zweite Zwischenplattenrückstellfederverjüngung ausbildet, wobei das an der zweiten Anpressplattenrückstellfeder anschlagbare zweite Abstützelement der zweiten Zwischenplatte und/oder das an der ersten Anpressplattenrückstellfeder anschlagbare erste Abstützelement der ersten Zwischenplatte zumindest teilweise in die zweite Zwischenplattenrückstellfederverjüngung hinein verlagerbar ist. Dadurch ist es nicht erforderlich die Zwischenplattenrückstellfeder in axialer Richtung oder in Umfangsrichtung versetzt zu den Abstützelementen der Zwischenplatten anzuordnen, um ein Anschlagen des Abstützelements zu vermeiden. Stattdessen kann das Abstützelement ohne bei einem entsprechend großen Hubweg an der Zwischenplattenrückstellfeder anzuschlagen durch die Zwischenplattenrückstellfederverjüngung hindurch an der Zwischenplattenrückstellfeder vorbeibewegt werden. Dadurch kann der axiale Bauraumbedarf besonders gering ausgestaltet sein. Das Abstützelement kann insbesondere von der Zwischenplatte nach radial außen abstehen und bei einem Schließen der jeweiligen Teilkupplung an der zugeordneten Anpressplattenrückstellfeder anschlagen, so dass die Zwischenplatte mit einer geeigneten Übersetzung über die insbesondere als Blattfeder ausgestaltete Anpressplattenrückstellfeder von der Anpressplatte mit verlagert werden kann, um die Reibbeläge der Kupplungsscheibe zu verpressen.

Insbesondere ist vorgesehen, dass die zweite Anpressplattenrückstellfeder mindestens eine insbesondere nach radial innen geöffnete zweite Anpressplattenrückstellfederverjüngung und/oder die zweite Zwischenplattenrückstellfeder mindestens eine insbesondere nach radial innen geöffnete zweite Zwischenplattenrückstellfederverjüngung ausbildet, wobei ein die erste Anpressplatte verlagerbarendes erstes Betätigungselement durch die zweite Anpressplattenrückstellfederverjüngung und/oder die zweite Zwischenplattenrückstellfederverjüngung hindurchgeführt ist, und/oder die erste Anpressplattenrückstellfeder mindestens eine insbesondere nach radial innen geöffnete erste Anpressplattenrückstellfederverjüngung und/oder die erste Zwischenplattenrückstellfeder mindestens eine insbesondere nach radial innen geöffnete erste Zwischenplattenrückstellfederverjüngung ausbildet, wobei ein die zweite Anpressplatte verlagerbarendes zweites Betätigungselement durch die erste Anpressplattenrückstellfederverjüngung und/oder die erste Zwischenplattenrückstellfederverjüngung hindurchgeführt ist. Durch die Rückstellfederverjüngung der insbesondere als Blattfeder ausgestalteten Rückstellfeder ist es nicht erforderlich, dass das beispielsweise als Betätigungstopf mit in axialer Richtung abstehenden Betätigungsfingern zum Kontaktieren der Anpressplatte Betätigungselement die Anpressplattenrückstellfeder radial außen umgreift. Stattdessen kann das Betätigungselement beispielsweise mit mehreren Betätigungsfingern durch ein oder mehrere Rückstellfederverjüngungen der Anpressplattenrückstellfeder und/oder der Zwischenplattenrückstellfeder radial innerhalb oder radial außerhalb zur Anpressplattenrückstellfeder verlaufen, so dass radialer Bauraum eingespart werden kann. Durch die Rückstellfederverjüngungen kann Platz für Nachbarbauteile, beispielsweise die Betätigungselemente, geschaffen werden. Wenn die Betätigungselemente die Rückstellfedern radial außen umgreifen, kann durch nach radial außen geöffnete Rückstellfederverjüngungen der Außendurchmesser der Betätigungselemente verringert werden.

Vorzugsweise sind die erste Gegenplatte und die zweite Gegenplatte über ein von dem Hauptverbindungselement befestigtes Zwischenstück axial zueinander beabstandet, wobei die erste Anpressplattenrückstellfeder und/oder die erste Zwischenplattenrückstellfeder und/oder die zweite Anpressplattenrückstellfeder und/oder die zweite Zwischenplattenrückstellfeder mit dem Zwischenstück verbunden ist. Das Zwischenstück kann beispielsweise einen in Umfangsrichtung abstehenden Ansatz und/oder eine im Wesentlichen L-förmige Ausgestaltung aufweisen, so dass zumindest eine Rückstellfeder mit dem Zwischenstück verbunden werden kann. Vorzugsweise kann das zur Verbindung der Rückstellfeder mit dem Zwischenstück vorgesehene Verbindungsmittel, insbesondere Nietverbindung, zusätzlich das Zwischenstück mit einer der Gegenplatten verbinden, so dass zusätzlich zum Hauptverbindungselement eine Verbindungswirkung des Zwischenstücks mit der Gegenplatte erreicht werden kann. Alternativ kann das Zwischenstück auch mit weiteren Verbindungsmitteln außer dem Hauptverbindungselement mit einer oder beiden gegenplatten verbunden werden, ohne dass die weiteren Verbindungsmittel auch zur Befestigung der Rückstellfedern dienen. Dass Zwischenstück kann mit beiden Gegenplatten verbunden sein, ohne dass es hierzu zwingend erforderlich ist, dass dazu ein Verbindungsmittel genutzt wird, das Kontakt zu beiden Gegenplatten hat. Es können auch mehrere Verbindungsmittel, die jeweils nur eine Gegenplatte mit dem Zwischenstück verbinden, verwendet werden.

Besonders bevorzugt ist mit der ersten Gegenplatte ein erstes Verbindungsstück, insbesondere ein im Wesentlichen axial verlaufender Stufenbolzen oder ein im Wesentlichen in Umfangsrichtung abgekröpft verlaufendes Verbindungsblech, und/oder mit der zweiten Gegenplatte ein zweites Verbindungsstück, insbesondere ein im Wesentlichen axial verlaufender Stufenbolzen oder ein im Wesentlichen in Umfangsrichtung abgekröpft verlaufendes Verbindungsblech, verbunden, wobei mit dem ersten Verbindungsstück die erste Anpressplattenrückstellfeder und/oder die erste Zwischenplattenrückstellfeder verbunden ist und/oder mit dem zweiten Verbindungsstück die zweite Anpressplattenrückstellfeder und/oder die zweite Zwischenplattenrückstellfeder verbunden ist. Die Anpressplattenrückstellfeder und die Zwischenplattenrückstellfeder können dadurch mit dem gemeinsamen Verbindungsstück befestigt werden, so dass für die mindestens zwei Rückstellfedern der Teilkupplung ein Bauteil ausreichend ist. Die Bauteileanzahl und der Montageaufwand können dadurch reduziert sein.

Insbesondere ist mit Hilfe eines an der ersten Anpressplattenrückstellfeder anschlagbaren ersten Abstützelement die erste Zwischenplattenrückstellfeder mit der ersten Zwischenplatte und/oder mit Hilfe eines an der zweiten Anpressplattenrückstellfeder anschlagbaren zweiten Abstützelement die zweite Zwischenplattenrückstellfeder mit der zweiten Zwischenplatte verbunden, wobei insbesondere das erste Abstützelement und/oder das zweite Abstützelement als Nietverbindung ausgestaltet ist. Das Abstützelement kann dadurch gleichzeitig als Verbindungsmittel zu Befestigung der Zwischenplattenrückstellfeder genutzt werden, wodurch die Bauteileanzahl und der Montageaufwand reduziert werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht einer Mehrscheibendoppelkupplung,
- Fig. 2:: eine schematische geschnittene Ansicht einer abgewickelten Darstellung der Mehrscheibenkupplung aus Fig. 1,
- Fig. 3:: eine schematische perspektivische Schnittansicht einer ersten Ausführungsform einer erfindungsgemäßen Mehrscheibendoppel kupplung,
- Fig. 4:: eine schematische perspektivische Ansicht einer zweiten Ausführungsform einer erfindungsgemäßen Mehrscheibendoppelkupplung,
- Fig. 5:: eine schematische perspektivische Ansicht einer dritten Ausführungsform einer erfindungsgemäßen Mehrscheibendoppelkupplung,
- Fig. 6:: eine schematische perspektivische Ansicht einer vierten Ausführungsform einer erfindungsgemäßen Mehrscheibendoppelkupplung,
- Fig. 7:: eine schematische perspektivische Ansicht einer fünften Ausführungsform einer erfindungsgemäßen Mehrscheibendoppelkupplung,
- Fig. 8:: eine schematische perspektivische getriebeseitige Ansicht einer sechten Ausführungsform einer erfindungsgemäßen Mehrscheibendoppelkupplung,
- Fig. 9:: eine schematische perspektivische motorseitige Ansicht der Mehrscheibendoppelkupplung aus Fig. 8 und
- Fig. 10:: eine schematische perspektivische Ansicht der Mehrscheibendoppelkupplung aus Fig. 3.

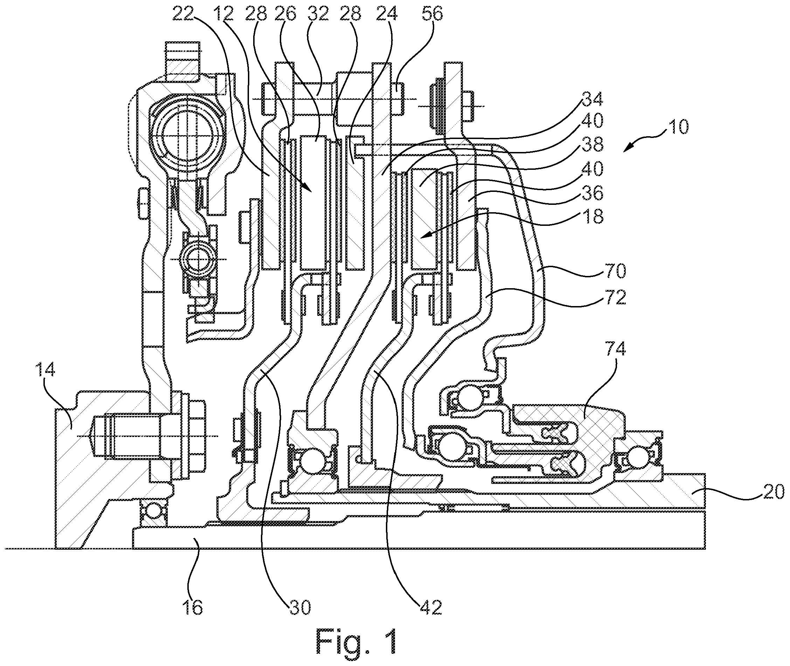

Der Grundaufbau einer Mehrscheibendoppelkupplung 10 ist aus der Fig. 1 ersichtlich.

Die in Fig. 1 dargestellte Mehrscheibendoppelkupplung 10 weist eine erste Teilkupplung 12 zum Kuppeln einer Antriebswelle 14 mit einer ersten Getriebeeingangswelle 16 und eine zweite Teilkupplung 18 zum Kuppeln der Antriebswelle 14 mit einer konzentrisch zur ersten Getriebeeingangswelle 16 angeordneten zweiten Getriebeeingangswelle 20 auf. Die erste Teilkupplung 12 weist eine erste Gegenplatte 22 und eine relativ zur ersten Gegenplatte 22 axial verlagerbare erste Anpressplatte 24 auf. Zwischen der ersten Gegenplatte 22 und der ersten Anpressplatte 24 ist eine axial verlagerbare erste Zwischenplatte 26 vorgesehen. Zwischen der ersten Gegenplatte 22 und der ersten Zwischenplatte 26 sowie zwischen der ersten Zwischenplatte 26 und der ersten Anpressplatte 24 sind jeweils axial zueinander verlagerbare erste Reibbeläge 28 einer ersten Kupplungsscheibe 30 vorgesehen. Die erste Kupplungsscheibe 30 ist drehfest mit der ersten Getriebeeingangswelle 16 verbunden. Die zweite Teilkupplung 18 weist eine zweite Gegenplatte 34 und eine relativ zur zweiten Gegenplatte 34 axial verlagerbare zweite Anpressplatte 36 auf. Zwischen der zweiten Gegenplatte 34 und der zweiten Anpressplatte 36 ist eine axial verlagerbare zweite Zwischenplatte 38 vorgesehen. Zwischen der zweiten Anpressplatte 36 und der zweiten Zwischenplatte 38 sowie zwischen der zweiten Zwischenplatte 38 und der zweiten Gegenplatte 34 sind jeweils axial zueinander verlagerbare zweite Reibbeläge 40 einer zweiten Kupplungsscheibe 42 vorgesehen. Die zweite Kupplungsscheibe 42 ist drehfest mit der zweiten Getriebeeingangswelle 20 verbunden. Die erste Anpressplatte 24 ist über eine erste Anpressplattenrückstellfeder 44 mit der ersten Gegenplatte 22 verbunden, während die erste Zwischenplatte 26 über eine erste Zwischenplattenrückstellfeder 46 mit der ersten Gegenplatte 22 verbunden ist. Die zweite Anpressplatte 36 ist über eine zweite Anpressplattenrückstellfeder 48 mit der zweiten Gegenplatte 34 verbunden, während die zweite Zwischenplatte 38 über eine zweite Zwischenplattenrückstellfeder 50 mit der zweiten Gegenplatte 34 verbunden ist. Mit Hilfe eines beispielsweise als tellerfederartige Hebelfeder oder Betätigungstopf ausgestalteten ersten Betätigungselement 70 kann die erste Anpressplatte 24 und mittelbar die mindestens eine erste Zwischenplatte 26 mit einer Betätigungskraft zum Verlagern der ersten Anpressplatte 24 beaufschlagt werden, während mit Hilfe eines beispielsweise als tellerfederartige Hebelfeder oder Betätigungstopf ausgestalteten zweiten Betätigungselement 72 die zweite Anpressplatte 26 und mittelbar die mindestens eine zweite Zwischenplatte 38 mit einer Betätigungskraft zum Verlagern der zweiten Anpressplatte 26 beaufschlagt werden kann. Die Betätigungskraft kann beispielsweise von einem hydraulischen Betätigungssystem 74 bereitgestellt werden.

Wie die nachfolgenden Figuren zeigen, sind die Zwischenplatten 26, 38 und die Anpressplatten 24, 36 über als Blattfedern ausgestaltete Rückstellfedern 44, 46, 48, 50 mit den relativ zur Teilkupplung 12, 18 feststehenden Teilen verbunden. Die erste Anpressplatte 24 ist über eine erste Anpressplattenrückstellfeder 44 mit der ersten Gegenplatte 22 verbunden, während die erste Zwischenplatte 26 über eine erste Zwischenplattenrückstellfeder 46 mit der ersten Gegenplatte 22 verbunden ist. Die zweite Anpressplatte 36 ist über eine zweite Anpressplattenrückstellfeder 48 mit der zweiten Gegenplatte 34 verbunden, während die zweite Zwischenplatte 38 über eine zweite Zwischenplattenrückstellfeder 50 mit der zweiten Gegenplatte 34 verbunden ist. Die Rückstellfedern 44, 46, 48, 50 dienen zur Zentrierung der Platten 24, 26, 36, 38 und zur Drehmomentübertragung. Gleichzeitig sind die Rückstellfedern 44, 46, 48, 50 in axialer Richtung elastisch und ermöglichen so eine geführte axiale Verlagerung der Zwischenplatten 26, 38 und Anpressplatten 24, 36. Beide Platten 24, 26; 36, 38 weisen mehrere auf dem Umfang verteilte als Blattfedern oder Blattfederpakete ausgestaltete Rückstellfedern 44, 46, 48, 50 auf. Um die Zwischenplattenbewegung im richtigen Verhältnis mit der Anpressplattenbewegung zu synchronisieren, stützt sich die Zwischenplatte 26, 38 über ein mit der Zwischenplatte 26, 38 verbundenes Abstützelement 74, 76 auf einer oder mehreren Blattfedern der Anpressplattenrückstellfedern 44, 48 der Anpressplatte 24, 36 ab.

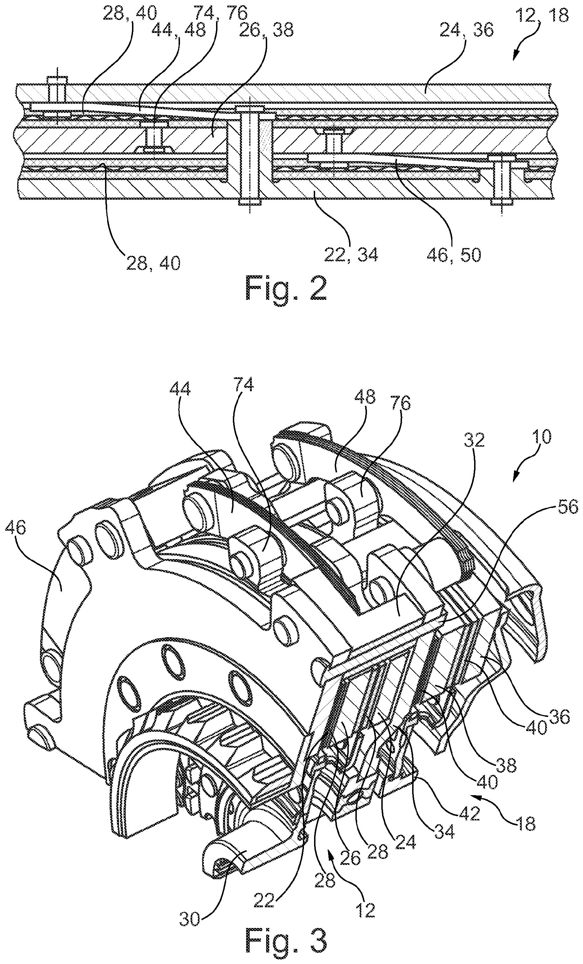

Das Grundprinzip zeigt die Fig. 2, in der schematisch die drei Platten Anpressplatte 24, 36, Zwischenplatte 26, 38 und Gegenplatte 22, 34 exemplarisch dargestellt sind, zwischen denen sich zwei als Belagringe ausgestalteten Reibbeläge 28, 40 der Kupplungsscheibe 30, 42 befinden. Sowohl die Anpressplatte 24, 36 als auch die Zwischenplatte 26, 38 ist über eigene Rückstellfedern 44, 46, 48, 50 mit der relativ zur Teilkupplung 12, 18 feststehenden Gegenplatte 22, 34 verbunden. Somit erfolgt die Kraftübertragung und die Zentrierung jeweils direkt zwischen der beweglichen Platte (Anpressplatte 24, 36 oder Zwischenplatte 26, 38) und den relativ zur Teilkupplung feststehenden Bauteilen (hier dargestellt durch die Gegenplatte 22, 34), ohne dass Tangentialkräfte und Zentrierwirkung von einer der beweglichen Platten 24, 26; 36, 38 auf die andere bewegliche Platte 26, 24; 38, 36 übertragen wird. Da die Fig. 2 nur einen Ausschnitt aus einer vereinfachten Abwicklung darstellt, ist jeweils nur eine Rückstellfeder sichtbar, die die Anpressplatte 24, 36 und die Gegenplatte 22, 34 hält. Es ist jedoch sinnvoll mehrere Rückstellfedern 44, 46, 48, 50 auf dem Umfang zu verteilen, die jeweils auf der einen Seite an der beweglichen Platte 24, 26; 36, 38 und auf der anderen Seite mit einem relativ zur Teilkupplung feststehenden Bauteil verbunden sind. Drei auf dem Umfang verteilte Positionen haben sich für die Blattfederanordnung der Rückstellfedern 24, 26; 36, 38 besonders bewährt. Pro Position können auch mehrere Blattfedern übereinander (gestapelt) angeordnet werden. Wenn die Zwischenplattenrückstellfedern 46, 50, die die Zwischenplatte 26, 38 halten, diese auch immer in Richtung der Anpressplatte 24, 36 und somit in Öffnungsrichtung der Teilkupplung 12, 18 kraftbeaufschlagen, reichen einfache Berührstellen aus, um die Zwischenplatte 26, 38 zu führen. Die Kontaktstellen heben durch die Axialkraft der Zwischenplattenrückstellfedern 46, 50 bei geöffneter Teilkupplung 12, 18 nicht von den Anpressplattenrückstellfedern 44, 48 ab. Nur bei ganz oder teilweise geschlossener Teilkupplung 12, 18 kann der Kontakt abheben, wenn die Belagfederungen der beiden als Belagringe ausgestalteten Reibbeläge 28,40 die Zwischenplatte 26, 38 in eine andere Position schieben, als in diesem Moment über die geometrische Wegkoppelung der Rückstellfedern 44, 46, 48, 50 vorgesehen ist.

Wie die Rückstellfedern 44, 46, 48, 50 auf dem Umfang der Mehrscheibendoppelkupplung 10 angeordnet werden können, zeigen die Fig. 3 und folgende. Bei dem in 3D-Ansicht gezeigten Sektor einer Mehrscheibendoppelkupplung 10, ist in der Fig. 3 gut erkennbar, dass die Anpressplattenrückstellfedern 44, 48 der Anpressplatten 24, 36 und die Zwischenplattenrückstellfedern 46, 50 der Zwischenplatten 26, 38 auf dem Umfang gesehen abwechselnd zwischen den Hauptbefestigungsstellen, an denen die Gegenplatten 22, 34 der beiden Teilkupplungen 12, 18 mit Hilfe eines als Nietverbindung ausgestalteten Hauptverbindungselement 56 miteinander verbunden sind, angeordnet sind. Die Gegenplatten sind über ein Zwischenstück 32 beabstandet, das mit Hilfe des Hauptverbindungselements 56 mit der ersten Gegenplatte 22 und der zweiten Gegenplatte 34 vernietet ist. Bei diesem Ausführungsbeispiel sind die Blattfederpakete der Anpressplattenrückstellfedern 44, 48, die die Anpressplatten 24, 36 der beiden Teilkupplungen 12, 18 halten, axial voreinander angeordnet. Somit sind auch die Abstützstellen, mit denen sich die Zwischenplatten 26, 38 auf den Anpressplattenrückstellfedern 44, 48 abstützen, fast genau auf der selben Umfangsposition angeordnet und stehen dadurch ebenfalls axial fast direkt voreinander. Diese Anordnung, die die Anpressplattenrückstellfedern 44, 48 und die Zwischenplattenrückstellfedern 46, 50 beider Teilkupplungen 12, 18 jeweils auf der gleichen Umfangsposition anordnet, hat einige Vorteile. Keine der Rückstellfedern 44, 46, 48, 50 liegt axial vor den Hauptbefestigungsstellen der Hauptverbindungselemente 56, wodurch beide Teilkupplungen 12, 18 separat montiert und teilweise auch getestet werden können, bevor die beiden Teilkupplung 12, 18 an den Hauptbefestigungsstellen mit Hilfe der Hauptverbindungselemente 56 zu einer Mehrscheibendoppelkupplung 10 zusammengefügt werden. Ein weiterer Vorteil besteht darin, dass die Anpressplattenrückstellfedern 44, 48, die größere Schwingwege sehen als die Zwischenplattenrückstellfedern 46, 50 und zudem auch zusätzlich durch die Zwischenplattenabstützung belastet werden und daher sinnvollerweise relativ lang ausgeführt werden sollten, direkt voreinander liegen. So dass man durch unterschiedliche Abstände zwischen den Hauptbefestigungsstellen der Hauptverbindungselemente 56 den Anpressplattenrückstellfedern 44, 48 beider Teilkupplungen 12, 18 den nötigen Bauraum in tangentialer Richtung zur Verfügung stellen kann.

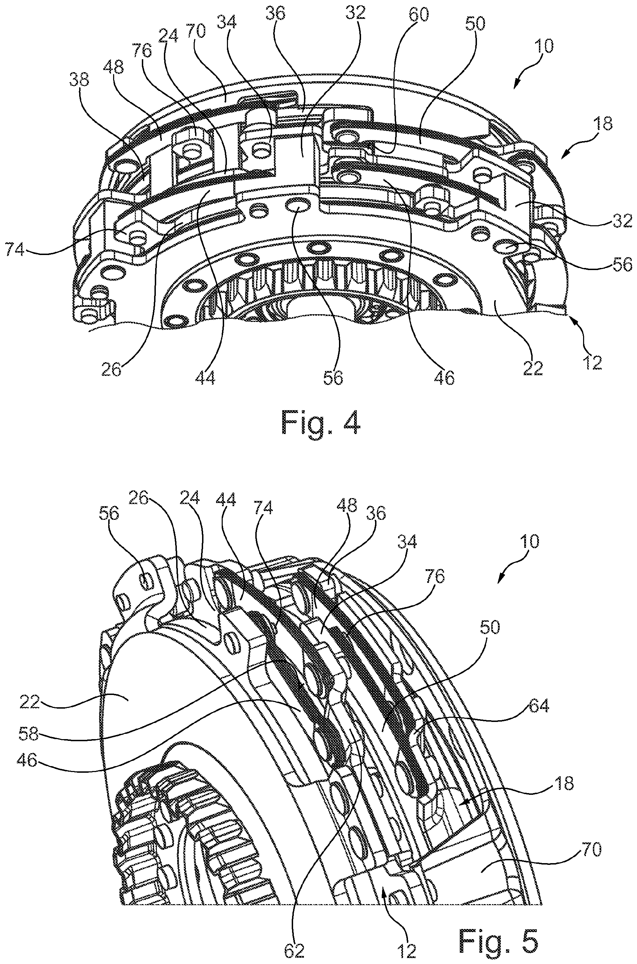

Die Fig. 4 zeigt ein weiteres Ausführungsbeispiel, bei dem die Hauptbefestigungsstellen der Hauptverbindungselemente 56 ebenfalls nicht von den Rückstellfedern 44, 46, 48, 50 verdeckt werden, die Anpressplattenrückstellfedern 44, 48 der einen Teilkupplung 12, 18 aber axial vor den Zwischenplattenrückstellfedern 46, 50 der anderen Teilkupplung 18, 12 liegen. Diese Anordnung ermöglicht es die Teilkupplung 12, 18 radial außen in Bereich der Rückstellfedern 44, 46, 48, 50 axial sehr kurz zu gestalten. Dieser Vorteil ergibt sich dadurch, dass vor den Anpressplattenrückstellfedern 44, 48, die durch ihren großen Bewegungsbereich (Abhub plus Verschleißreserve jeweils für beide Reibbeläge 28, 40 der Kupplungsscheibe 30, 42) und die mit ihren zusammenwirkenden Abstützstellen der Zwischenplatten 26, 38 vergleichsweise viel axialen Bauraum benötigen, nur die deutlich weniger axialen Bauraum benötigenden Zwischenplattenrückstellfedern 46, 50 angeordnet sind. Werden hingegen die Anpressplattenrückstellfedern 44, 46 beider Teilkupplungen 12, 18 voreinander angeordnet, benötigt diese Kombination in diesem Beiche deutlich mehr axialen Bauraum, der dann den benötigten Rotationsbauraum für die Teilkupplung 12, 18 bestimmt.

Eine weitere Blattfederanordnung zeigt Fig. 5. Bei diesem Ausführungsbeispiel liegen die Anpressplattenrückstellfedern 44, 48 und die Zwischenplattenrückstellfedern 46, 50 in Umfangsrichtung versetzt voreinander. Dadurch kann die Befestigungsstelle zwischen der Zwischenplatte 26, 38 und ihren Zwischenplattenrückstellfedern 46, 50 gleichzeitig auch als Abstützposition der Zwischenplatte 26, 38 auf den Anpressplattenrückstellfedern 44, 48 genutzt werden. In dem Ausführungsbeispiel sind dazu die Niete, die die Zwischenplattenrückstellfeder 46, 50 mit der Zwischenplatte 26, 38 verbinden, mit einer Kontaktgeometrie für die Anpressplattenrückstellfedern versehen (Kopf mit einem zentralen abgerundeten Fortsatz). Durch die versetzte Anordnung der Rückstellfedern 44, 46, 48, 50, wird höchstwahrscheinlich die Verbindung zwischen den Anpressplattenrückstellfedern 44, 48 und deren relativ zur Teilkupplung 12, 18 feststehenden Nachbarbauteil durch die Zwischenplattenrückstellfedern 46, 50 abgedeckt. Insbesondere wenn es sich um Nietverbindungen handelt, kann dies den Montageablauf der Teilkupplung 12, 18 erschweren, da diese Verbindung vernietet werden muss, bevor die Zwischenplattenrückstellfedern 46, 50 in ihre Montageposition gebracht werden. Ein Ausweg aus dieser Montageschwierigkeit zeigt das abgebildete Ausführungsbeispiel bei der motorseitigen ersten Teilkupplung 12. Wenn die Nieten, die die Anpressplattenrückstellfedern 44, 48 mit einem relativ zur Teilkupplung 12, 18 feststehenden Bauteil verbinden, auf einem größeren Teilkreis liegen, als die Nietpositionen der Verbindung von den Zwischenplattenrückstellfedern 46, 50 und den festen Teilen, liegt die Vernietung der Anpressplattenrückstellfedern 44, 48 nicht mehr genau hinter den Zwischenplattenrückstellfedern 46, 50. Durch eine sinnvolle Abstufung der Teilkreise und/oder durch eine Form der Zwischenplattenrückstellfedern 46, 50, die den Mittelteil der Zwischenplattenrückstellfedern 46, 50 mit Hilfe einer nach radial außen geöffneten Zwischenplattenrückstellfederverjüngung 58, 60 radial weiter nach innen verlegt als die Vernietungsstellen, kann die axiale Zugänglichkeit der Anpressplattenblattfedervernietung ermöglicht werden.

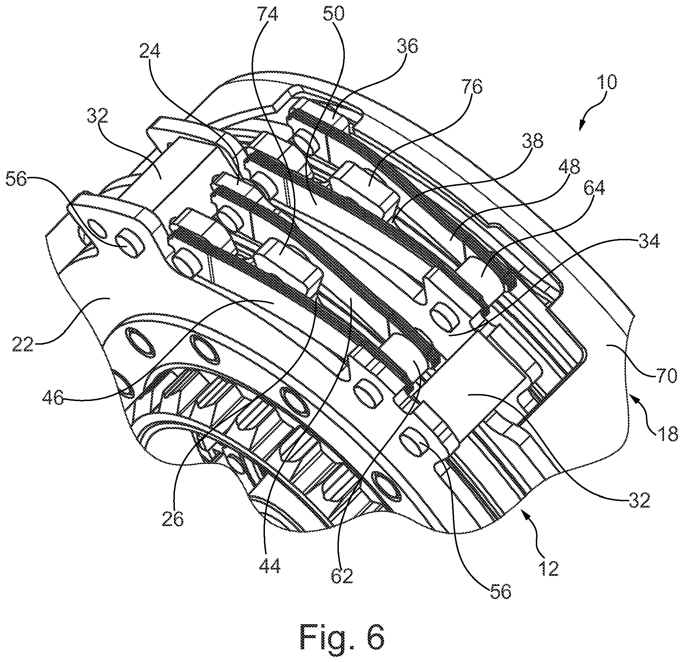

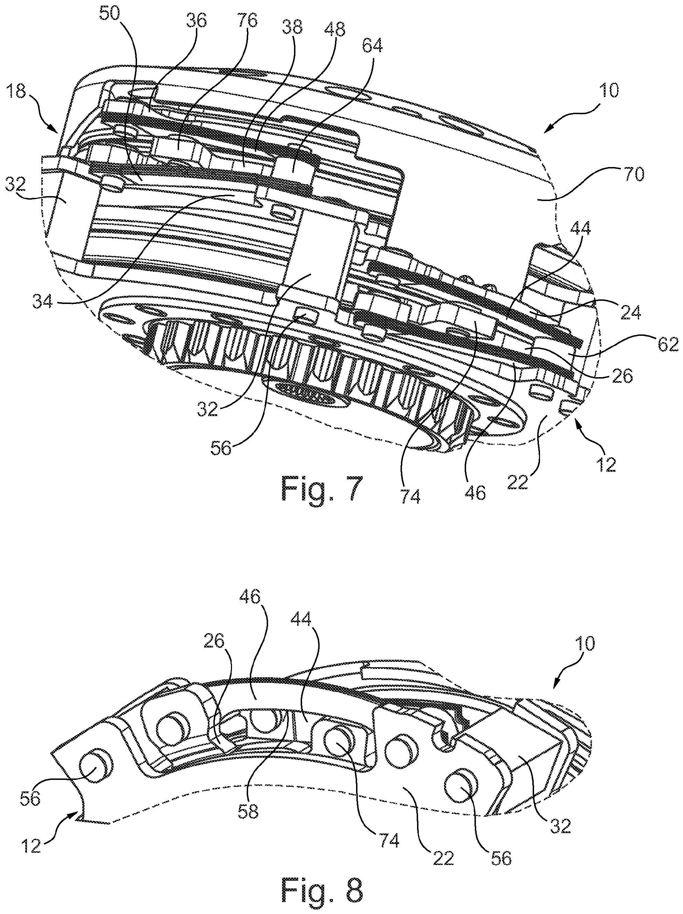

Es gibt auch spezielle Mehrscheibendoppelkupplungen 10 bei denen nicht der gesamte Außenbereich für die Rückstellfedern 44, 46, 48, 50 und die Hauptverbindungselemente 56, die die Gegenplatten 22, 34 verbinden, genutzt werden kann. Bei diesen Mehrscheibendoppelkupplungen 10 sollen die Blattfederpakete der Rückstellfedern 44, 46, 48, 50 sehr kompakt und dicht beieinander angeordnet werden. Zwei Ausführungsbeispiele, die ein ähnliches Grundprinzip nutzen, um die Rückstellfedern 44, 46, 48, 50 dicht zusammen anzuordnen, zeigen die Fig. 6 und 7. Dabei werden jeweils die Blattfederpakete der Rückstellfedern 44, 46, 48, 50 für die Anpressplatte 24, 36 und für die Zwischenplatte 26, 38 der selben Teilkupplung 12, 18 direkt axial voreinander angeordnet. Dies ist möglich, wenn man die Rückstellfedern 44, 46, 48, 50 auf der Seite, wo sie mit den relativ zur Teilkupplung 12, 18 feststehenden Bauteilen (z.B. Gegenplatten 22, 34) verbunden sind, aufeinander oder axial versetzt voreinander befestigt. In den abgebildeten Ausführungsbeispielen ist dies durch ein als Stufenbolzen ausgestaltetes Verbindungsstück 62, 64 realisiert, der beide Blattfederpakete der Rückstellfedern 44, 46, 48, 50 mit der Gegenplatte 22, 34 verbindet. Statt durch einen Stufenbolzen kann dies auch über eine Niete oder ein anders Befestigungsmittel erfolgen, das beide Blattfederpakete der Rückstellfedern 44, 46, 48, 50 aufeinanderliegend oder durch ein Distanzstück (z.B. eine Hülse) getrennt mit einem relativ zur Teilkupplung 12, 18 feststehenden Bauteil verbindet. Bei dem Ausführungsbeispiel aus Fig. 6 befinden sich vier Rückstellfedern 44, 46, 48, 50 axial gestaffelt zwischen zwei Hauptbefestigungsstellen der Hauptbefestigungselemente 56. Wenn pro Platte jeweils drei Rückstellfedern 44, 46; 48, 50 auf dem Umfang der Teilkupplung 12, 18 verteilt angeordnet werden, lassen sich alle Rückstellfedern 44, 46, 48, 50 in drei Blattfederanordnungen in der abgebildeten Weise kompakt unterbringen. Auf dem Umfang der Teilkupplung 12, 18 ergeben sich dann zwischen den Blattfederanordnungen große Stellen, in denen sich keine Rückstellfedern 44, 46, 48, 50 befinden. Diese Stellen können dann für andere Kupplungsbauteile oder mit der Teilkupplung 12, 18 verbundene Bauteile genutzt werden.

Das Ausführungsbeispiel, das in der Fig. 7 zu sehen ist, nutzt für die Rückstellfedern 44, 46, 48, 50 das selbe platzsparende Befestigungsprinzip. Allerdings ist jeweils nur eine Zwischenplattenrückstellfeder 46, 50 und eine Anpressplattenrückstellfeder 44, 48 einer Teilkupplung 12, 18 axial voreinander angeordnet. Die Rückstellfedern 44, 46, 48, 50 der anderen Teilkupplung 18, 12 werden in gleicher Weise angeordnet, befinden sich aber auf einer auf dem Umfang der Teilkupplung 12, 18 versetzt angeordneten Winkelposition. Somit entstehen ebenfalls Freiräume auf dem Umfang der Mehrscheibendoppelkupplung 10, die für andere Zwecke oder andere Bauteile nutzbar sind. In der Fig. 7 sind die Rückstellfedern 44, 46, 48, 50 immer radial über den Platten 24, 26, 36, 38 angeordnet, mit denen sie verbunden sind. Dadurch ist in der Figur die Zuordnung der Rückstellfedern 44, 46, 48, 50 zu ihren Platten 24, 26, 36, 38 und die Funktion der Rückstellfedern 44, 46, 48, 50 leichter ersichtlich. In einer realen Mehrscheibendoppelkupplung 10 können die Blattfederbefestigungslaschen der Platten 24, 26, 36, 38, an denen die Rückstellfedern 44, 46, 48, 50 angenietet oder auf andere Weise befestigt sind, ebenso wie die als Abstützlaschen ausgestalteten Abstützelemente 74, 76 nicht nur gerade sondern auch abgekröpft hergestellt werden. Dadurch lassen sich die Rückstellfedern 44, 46, 48, 50 in einer etwas anderen Lage anordnen, als die mit ihnen verbundene Platten 24, 26, 36, 38. Besonders interessant ist es, bei dem Ausführungsbeispiel der Fig. 7 die Blattfederlaschen der motorseitigen ersten Teilkupplung 12 in Richtung der getriebeseitigen zweiten Teilkupplung 18 zu kröpften und die Blattfederlaschen der getriebeseitigen zweiten Teilkupplung 18 in Richtung der motorseitigen ersten Teilkupplung 12. Dadurch werden die Rückstellfedern 44, 46, 48, 50 beider Teilkupplungen 12, 18 in Richtung Kupplungsmitte verlagert. Somit muss im Rotationsbauraum der Mehrscheibendoppelkupplung 10 nur in der Mitte der Mehrscheibendoppelkupplung 10 Platz für die Rückstellfedern 44, 46, 48, 50 und ihre Anbindeelemente freigehalten werden.

Die auf dem Umfang der Mehrscheibendoppelkupplung 10 freigewordenen Bereiche lassen sich bei Teilkupplungen 12, 18, die mehr als zwei Belagringe 52, 54 und mehr als eine Zwischenplatte 26, 38 pro Teilkupplung 12, 18 aufweisen, auch nutzen um weitere Zwischenplattenrückstellfedern 46, 50 für die weiteren Zwischenplatten 26, 38 anzuordnen.

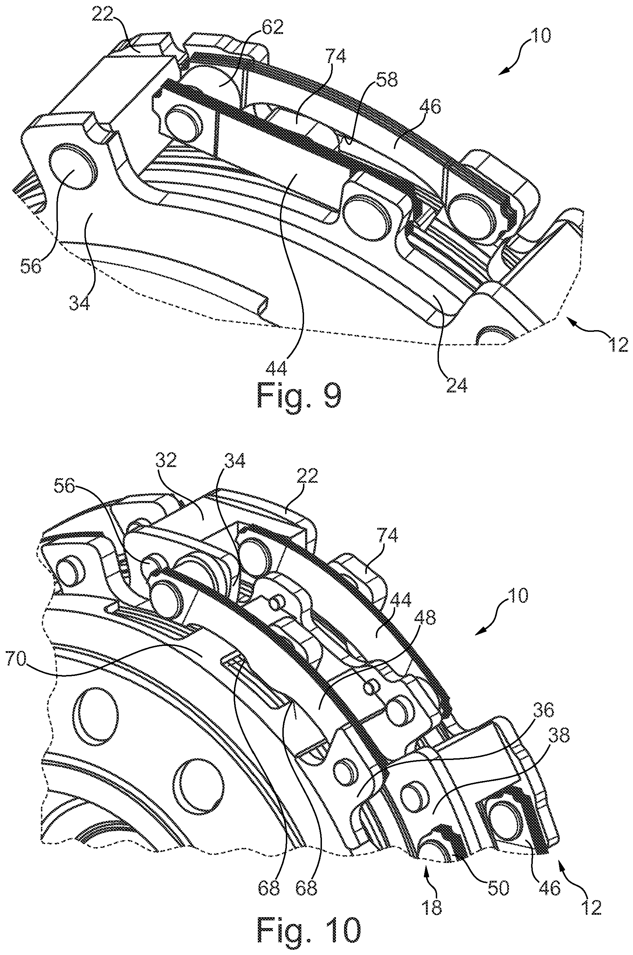

Wenn die Rückstellfedern 44, 46, 48, 50 aus Bauraumgründen immer dichter zusammen angeordnet werden sollen, rücken auch ihre Befestigungselemente und die Anbindeelemente, die die Rückstellfedern 44, 46, 48, 50 mit der Teilkupplung 12, 18 und/oder den Platten 24, 26, 36, 38 verbinden immer näher zusammen. Es ist daher sinnvoll die Rückstellfedern 44, 46, 48, 50 nicht nur axial sondern auch tangential und radial zu staffeln. Die Figuren 8 und 9 zeigen dafür ein Ausführungsbeispiel aus zwei unterschiedlichen Perspektiven. Da die Anpressplattenrückstellfedern 44, 48 in radialer Richtung so nah wie möglich an den Kupplungsscheiben 30, 42 entlanglaufen und die Zwischenplattenrückstellfedern 46, 50 in ihrem Mittelbereich radial nach außen verlegt wurden, kann sich das Abstützelement 74, 76 der Zwischenplatte 26, 38 weiterhin an den Anpressplattenrückstellfedern 44, 48 abstützen und bei ihrer Bewegung unter den Zwischenplattenrückstellfedern 46, 50 durchtauchen. Um die Rückstellfedern 44, 46, 48, 50 radial weiter außen oder innen anzuordnen, könne diese natürlich durch die Verlagerung des Befestigungsteilkreises neu positioniert werden. Eine besonders interessante Alternative ist jedoch, bogenförmige Blattfedern für die Rückstellfedern 44, 46, 48, 50 zu verwenden und/oder die Rückstellfedern 44, 46, 48, 50 zu taillieren. Durch die taillierte Form mit Hilfe von mindestens einer Anpressplattenrückstellfederverjüngung 66, 68 kann der Mittelteil der Anpressplattenrückstellfeder schmaler sein als deren Befestigungsbereiche. Um bei dem Ausführungsbeispiele radial unter den Zwischenplattenrückstellfedern 46, 50 genug Platz für das Abstützelement 74, 76 zu schaffen, wurden die Zwischenplattenrückstellfedern 46, 50 nach radial außen bogenförmig gekrümmt, tailliert und die Anbindebereiche nicht mittig sondern nach radial innen verlagert an den Zwischenplattenrückstellfedern 46, 50 ausgeformt.

Zusätzlich ist bei dem Ausführungsbeispiel erkennbar, dass die Rückstellfedern 44, 46, 48, 50 unterschiedlich lang sind. Somit liegen die Befestigungsmittel, die die Rückstellfedern 44, 46, 48, 50 an der Zwischenplatte 26, 38 oder der Anpressplatte 24, 36 anbinden nicht direkt voreinander und können bei der Bewegung der Platten 24, 26, 36, 38 zumindest teilweise aneinander vorbei schwenken.

Durch mit Hilfe von Verjüngungen 58, 60, 66, 68 taillierte Blattfedern für die Rückstellfedern 44, 46, 48, 50 lassen sich verschiedene Bauraumschwierigkeiten lösen. Beispielsweise wurde in der Fig. 5 bereits gezeigt, dass durch eine als taillierte Blattfeder ausgestaltete erste Zwischenplattenrückstellfeder 46 die für die Montage wichtige axiale Zugänglichkeit zu einer Nietverbindung ermöglicht wird.

Die Fig. 10 zeigt das bereits aus der Fig. 3 bekannte Ausführungsbeispiel aus einer anderen Perspektive. Die zweiten Anpressplattenrückstellfedern 48 der getriebeseitigen zweiten Teilkupplung 18 sind hier an zwei Stellen tailliert, um eine Verschachtelung mit dem als Drucktopf ausgestalteten zweiten Betätigungselement zu ermöglichen. Dass die taillierten Blattfedern der Rückstellfedern 44, 46, 48, 50 unterschiedlich breite Bereiche aufweisen, lässt sich auch für die Spannungsoptimierung der Rückstellfedern 44, 46, 48, 50 nutzen. An den Stellen, an denen die Rückstellfedern 44, 46, 48, 50 besonders stark beansprucht werden, ist die Blattfeder breiter ausgeführt, als an weniger stark beanspruchten Stellen. Die Befestigungsbereiche, an denen die Rückstellfedern 44, 46, 48, 50 angebunden, insbesondere vernietet, sind und in deren unmittelbaren Nähe hohe Biegebelastungen auf die Rückstellfedern 44, 46, 48, 50 wirken, sind daher breiter als die schmalen weniger beanspruchten Stellen. Der Bereich in dem sich die Zwischenplatte 26, 38 auf den Anpressplattenrückstellfedern 44, 48 abstützt ist ebenfalls durch seine breite Form verstärkt. Durch die Verstärkung des Blattfederquerschnitts in diesem stark beanspruchten Bereich, können die Spannungen, welche durch die vom dem Abstützelement 74, 76 auf die Anpressplattenrückstellfedern 44, 48 wirkende Kraft entstehen, reduziert werden.

Die Blattfedern der Rückstellfedern 44, 46, 48, 50 werden wegen ihrer geringen Reibung insbesondere in trockenen Doppelkupplungen eingesetzt. Alle hier vorgestellten Anordnungs- und Ausgestaltungskonzepte lassen sich aber auch in nasslaufenden Kupplungen verwenden.

### Bezugszeichenliste

- 10: Mehrscheibendoppelkupplung
- 12: erste Teilkupplung
- 14: Antriebswelle
- 16: erste Getriebeeingangswelle
- 18: zweite Teilkupplung
- 20: zweite Getriebeeingangswelle
- 22: erste Gegenplatte
- 24: erste Anpressplatte
- 26: erste Zwischenplatte
- 28: erster Reibbelag
- 30: erste Kupplungsscheibe
- 32: Zwischenstück
- 34: zweite Gegenplatte
- 36: zweite Anpressplatte
- 38: zweite Zwischenplatte
- 40: zweiter Reibbelag
- 42: zweite Kupplungsscheibe
- 44: erste Anpressplattenrückstellfeder
- 46: erste Zwischenplattenrückstellfeder
- 48: zweite Anpressplattenrückstellfeder
- 50: zweite Zwischenplattenrückstellfeder
- 56: Hauptverbindungselement
- 58: erste Zwischenplattenrückstellfederverjüngung
- 60: zweite Zwischenplattenrückstellfederverjüngung
- 62: erstes Verbindungsstück
- 64: zweites Verbindungsstück
- 66: erste Anpressplattenrückstellfederverjüngung
- 68: zweite Anpressplattenrückstellfederverjüngung
- 70: erstes Betätigungselement
- 72: zweites Betätigungselement
- 74: Betätigungssystem
- 74: erstes Abstützelement
- 76: zweites Abstützelement

## Patentansprüche

1. Mehrscheibendoppelkupplung zum Kuppeln einer Antriebswelle (14) eines Kraftfahrzeugmotors mit einer ersten Getriebeeingangswelle (16) und/oder einer zweiten Getriebeeingangswelle (20), mit
einer ersten Teilkupplung (12) zum Kuppeln der Antriebswelle (14) mit der ersten Getriebeeingangswelle (16), und einer zweiten Teilkupplung (18) zum Kuppeln der Antriebswelle (14) mit der zweiten Getriebeeingangswelle (20), **dadurch gekennzeichnet, dass** die erste Teilkupplung (12) eine erste Gegenplatte (22), mindestens eine über eine erste Zwischenplattenrückstellfeder (46) mit der ersten Gegenplatte (22) verbundene relativ zur ersten Gegenplatte (22) axial verlagerbare erste Zwischenplatte (26) und eine über eine erste Anpressplattenrückstellfeder (44) mit der ersten Gegenplatte (22) verbundene relativ zur ersten Gegenplatte (22) und zur ersten Zwischenplatte (26) axial verlagerbare erste Anpressplatte (24) zum Verpressen von ersten Reibbelägen (28) einer ersten Kupplungsscheibe (30) zwischen der ersten Gegenplatte (22) und der ersten Zwischenplatte (26) sowie zwischen der ersten Zwischenplatte (26) und der ersten Anpressplatte (24) aufweist, und die zweite Teilkupplung (18) eine zweite Gegenplatte (34), mindestens eine über eine zweite Zwischenplattenrückstellfeder (50) mit der zweiten Gegenplatte (34) verbundene relativ zur zweiten Gegenplatte (34) axial verlagerbare zweite Zwischenplatte (38) und eine über eine zweite Anpressplattenrückstellfeder (48) mit der zweiten Gegenplatte (34) verbundene relativ zur zweiten Gegenplatte (34) und zur zweiten Zwischenplatte (38) axial verlagerbare zweite Anpressplatte (36) zum Verpressen von zweiten Reibbelägen (40) einer zweiten Kupplungsscheibe (42) zwischen der zweiten Gegenplatte (34) und der zweiten Zwischenplatte (38) sowie zwischen der zweiten Zwischenplatte (38) und der zweiten Anpressplatte (36) aufweist, und
einem die erste Gegenplatte (22) mit der zweiten Gegenplatte (34) drehfest verbindenden Hauptverbindungselement (56), insbesondere Nietverbindung, wobei das Hauptverbindungselement (56) zur ersten Anpressplattenrückstellfeder (44), zur ersten Zwischenplattenrückstellfeder (46), zur zweiten Anpressplattenrückstellfeder (48) und zur zweiten Zwischenplattenrückstellfeder (50) in Umfangsrichtung und/oder in radialer Richtung versetzt angeordnet ist.

2. Mehrscheibendoppelkupplung nach Anspruch 1 **dadurch gekennzeichnet, dass** die erste Anpressplattenrückstellfeder (44) und die zweite Anpressplattenrückstellfeder (48) im Wesentlichen vollständig oder teilweise und/oder die erste Zwischenplattenrückstellfeder (46) und die zweite Zwischenplattenrückstellfeder (50) im Wesentlichen vollständig oder teilweise in axialer Richtung hintereinander angeordnet sind.

3. Mehrscheibendoppelkupplung nach Anspruch 1 oder 2 **dadurch gekennzeichnet, dass** die erste Anpressplattenrückstellfeder (44) und die zweite Zwischenplattenrückstellfeder (50) im Wesentlichen vollständig oder teilweise und/oder die zweite Anpressplattenrückstellfeder (48) und die erste Zwischenplattenrückstellfeder (46) im Wesentlichen vollständig oder teilweise in axialer Richtung hintereinander angeordnet sind.

4. Mehrscheibendoppelkupplung nach einem der Ansprüche 1 bis 3 **dadurch gekennzeichnet, dass** die erste Anpressplattenrückstellfeder (44) und die erste Zwischenplattenrückstellfeder (46) im Wesentlichen vollständig oder teilweise und/oder die zweite Anpressplattenrückstellfeder (48) und die zweite Zwischenplattenrückstellfeder (50) im Wesentlichen vollständig oder teilweise in axialer Richtung hintereinander angeordnet sind.

5. Mehrscheibendoppelkupplung nach einem der Ansprüche 1 bis 4 **dadurch gekennzeichnet, dass** die erste Anpressplattenrückstellfeder (44), die erste Zwischenplattenrückstellfeder (46), die zweite Anpressplattenrückstellfeder (48) und die zweite Zwischenplattenrückstellfeder (50) im Wesentlichen vollständig oder teilweise in axialer Richtung hintereinander angeordnet sind.

6. Mehrscheibendoppelkupplung nach einem der Ansprüche 1 bis 5 **dadurch gekennzeichnet, dass** eine der Rückstellfedern (44, 46, 48, 50) in axialer Richtung betrachtet mindestens eine andere Rückstellfeder (46, 48, 50, 44) im Wesentlichen vollständig überdeckt und eine weitere andere Rückstellfeder (48, 50, 44, 46) nur teilweise überdeckt.

7. Mehrscheibendoppelkupplung nach einem der Ansprüche 1 bis 6 **dadurch gekennzeichnet, dass** die erste Zwischenplattenrückstellfeder (46) mindestens eine insbesondere nach radial innen geöffnete erste Zwischenplattenrückstellfederverjüngung (58) ausbildet, wobei ein an der ersten Anpressplattenrückstellfeder (44) anschlagbares erstes Abstützelement (74) der ersten Zwischenplatte (26) und/oder ein an der zweiten Anpressplattenrückstellfeder (48) anschlagbares zweites Abstützelement (76) der zweiten Zwischenplatte (38) zumindest teilweise in die erste Zwischenplattenrückstellfederverjüngung (58) hinein verlagerbar ist, und/oder die zweite Zwischenplattenrückstellfeder (50) mindestens eine insbesondere nach radial innen geöffnete zweite Zwischenplattenrückstellfederverjüngung (60) ausbildet, wobei das an der zweiten Anpressplattenrückstellfeder (48) anschlagbare zweite Abstützelement (76) der zweiten Zwischenplatte (38) und/oder das an der ersten Anpressplattenrückstellfeder (44) anschlagbare erste Abstützelement (74) der ersten Zwischenplatte (26)zumindest teilweise in die zweite Zwischenplattenrückstellfederverjüngung (60) hinein verlagerbar ist.

8. Mehrscheibendoppelkupplung nach einem der Ansprüche 1 bis 7 **dadurch gekennzeichnet, dass** die zweite Anpressplattenrückstellfeder (48) mindestens eine insbesondere nach radial innen geöffnete zweite Anpressplattenrückstellfederverjüngung (68) und/oder die zweite Zwischenplattenrückstellfeder (50) mindestens eine insbesondere nach radial innen geöffnete zweite Zwischenplattenrückstellfederverjüngung (60) ausbildet, wobei ein die erste Anpressplatte (24) verlagerbarendes erstes Betätigungselement (70) durch die zweite Anpressplattenrückstellfederverjüngung (68) und/oder die zweite Zwischenplattenrückstellfederverjüngung (60) hindurchgeführt ist, und/oder die erste Anpressplattenrückstellfeder (44) mindestens eine insbesondere nach radial innen geöffnete erste Anpressplattenrückstellfederverjüngung (66) und/oder die erste Zwischenplattenrückstellfeder (46) mindestens eine insbesondere nach radial innen geöffnete erste Zwischenplattenrückstellfederverjüngung (58) ausbildet, wobei ein die zweite Anpressplatte (36) verlagerbarendes zweites Betätigungselement (72) durch die erste Anpressplattenrückstellfederverjüngung (66) und/oder erste Zwischenplattenrückstellfederverjüngung (58) hindurchgeführt ist.

9. Mehrscheibendoppelkupplung nach einem der Ansprüche 1 bis 8 **dadurch gekennzeichnet, dass** die erste Gegenplatte (22) und die zweite Gegenplatte (34) über ein von dem Hauptverbindungselement (56) befestigtes Zwischenstück (32) axial zueinander beabstandet sind, wobei die erste Anpressplattenrückstellfeder (44) und/oder die erste Zwischenplattenrückstellfeder (46) und/oder die zweite Anpressplattenrückstellfeder (48) und/oder die zweite Zwischenplattenrückstellfeder (50) mit dem Zwischenstück (32) verbunden ist.

10. Mehrscheibendoppelkupplung nach einem der Ansprüche 1 bis 9 **dadurch gekennzeichnet, dass** mit der ersten Gegenplatte (22) ein erstes Verbindungsstück (62), insbesondere ein im Wesentlichen axial verlaufender Stufenbolzen oder ein im Wesentlichen in Umfangsrichtung abgekröpft verlaufendes Verbindungsblech, und/oder mit der zweiten Gegenplatte (34) ein zweites Verbindungsstück (64), insbesondere ein im Wesentlichen axial verlaufender Stufenbolzen oder ein im Wesentlichen in Umfangsrichtung abgekröpft verlaufendes Verbindungsblech, verbunden ist, wobei mit dem ersten Verbindungsstück (62) die erste Anpressplattenrückstellfeder (44) und/oder die erste Zwischenplattenrückstellfeder (46) verbunden ist und/oder mit dem zweiten Verbindungsstück (64) die zweite Anpressplattenrückstellfeder (48) und/oder die zweite Zwischenplattenrückstellfeder (50) verbunden ist.

11. Mehrscheibendoppelkupplung nach einem der Ansprüche 1 bis 10 **dadurch gekennzeichnet, dass** mit Hilfe eines an der ersten Anpressplattenrückstellfeder (44) anschlagbaren ersten Abstützelement (74) die erste Zwischenplattenrückstellfeder (46) mit der ersten Zwischenplatte (26) und/oder mit Hilfe eines an der zweiten Anpressplattenrückstellfeder (48) anschlagbaren zweiten Abstützelement (76) die zweite Zwischenplattenrückstellfeder (50) mit der zweiten Zwischenplatte (38) verbunden ist, wobei insbesondere das erste Abstützelement (74) und/oder das zweite Abstützelement (76) als Nietverbindung ausgestaltet ist.

## Claims

1. Multi-disc double clutch for coupling a drive shaft (14) of a motor vehicle engine to a first transmission input shaft (16) and/or a second transmission input shaft (20), having a first component clutch (12) for coupling the drive shaft (14) to the first transmission input shaft (16), and a second component clutch (18) for coupling the drive shaft (14) to the second transmission input shaft (20), **characterized in that** the first component clutch (12) has a first counterplate (22), at least one first intermediate plate (26) which is connected via a first intermediate plate restoring spring (46) to the first counterplate (22) and can be moved axially relative to the first counterplate (22), and a first pressure plate (24) for pressing first friction linings (28) of a first clutch disc (30) between the first counterplate (22) and the first intermediate plate (26) and between the first intermediate plate (26) and the first pressure plate (24), which first pressure plate (24) is connected via a first pressure plate restoring spring (44) to the first counterplate (22) and can be moved axially relative to the first counterplate (22) and relative to the first intermediate plate (26), and the second component clutch (18) having a second counterplate (34), at least one second intermediate plate (38) which is connected via a second intermediate plate restoring spring (50) to the second counterplate (34) and can be moved axially relative to the second counterplate (34), and a second pressure plate (36) for pressing second friction linings (40) of a second clutch disc (42) between the second counterplate (34) and the second intermediate plate (38) and between the second intermediate plate (38) and the second pressure plate (36), which second pressure plate (36) is connected via a second pressure plate restoring spring (48) to the second counterplate (34) and can be moved axially relative to the second counterplate (34) and relative to the second intermediate plate (38), and a main connecting element (56), in particular a riveted connection, which connects the first counterplate (22) to the second counterplate (34) fixedly so as to rotate with it, the main connecting element (56) being arranged offset in the circumferential direction and/or in the radial direction with respect to the first pressure plate restoring spring (44), with respect to the first intermediate plate restoring spring (46), with respect to the second pressure plate restoring spring (48) and with respect to the second intermediate plate restoring spring (50).

2. Multi-disc double clutch according to Claim 1, **characterized in that** the first pressure plate restoring spring (44) and the second pressure plate restoring spring (48) are arranged substantially completely or partially behind one another in the axial direction, and/or the first intermediate plate restoring spring (46) and the second intermediate plate restoring spring (50) are arranged substantially completely or partially behind one another in the axial direction.

3. Multi-disc double clutch according to Claim 1 or 2, **characterized in that** the first pressure plate restoring spring (44) and the second intermediate plate restoring spring (50) are arranged substantially completely or partially behind one another in the axial direction, and/or the second pressure plate restoring spring (48) and the first intermediate plate restoring spring (46) are arranged substantially completely or partially behind one another in the axial direction.

4. Multi-disc double clutch according to one of Claims 1 to 3, **characterized in that** the first pressure plate restoring spring (44) and the first intermediate plate restoring spring (46) are arranged substantially completely or partially behind one another in the axial direction, and/or the second pressure plate restoring spring (48) and the second intermediate plate restoring spring (50) are arranged substantially completely or partially behind one another in the axial direction.

5. Multi-disc double clutch according to one of Claims 1 to 4, **characterized in that** the first pressure plate restoring spring (44), the first intermediate plate restoring spring (46), the second pressure plate restoring spring (48) and the second intermediate plate restoring spring (50) are arranged substantially completely or partially behind one another in the axial direction.

6. Multi-disc double clutch according to one of Claims 1 to 5, **characterized in that**, as viewed in the axial direction, one of the restoring springs (44, 46, 48, 50) covers at least another restoring spring (46, 48, 50, 44) substantially completely and covers a further other restoring spring (48, 50, 44, 46) only partially.

7. Multi-disc double clutch according to one of Claims 1 to 6, **characterized in that** the first intermediate plate restoring spring (46) configures at least one first intermediate plate restoring spring tapered portion (58) which is open, in particular, radially to the inside, it being possible for a first supporting element (74) of the first intermediate plate (26), which first supporting element (74) can come into contact with the first pressure plate restoring spring (44), and/or a second supporting element (76) of the second intermediate plate (38), which second supporting element (76) can come into contact with the second pressure plate restoring spring (48), to be moved at least partially into the first intermediate plate restoring spring tapered portion (58), and/or the second intermediate plate restoring spring (50) configures at least one second intermediate plate restoring spring tapered portion (60) which is open, in particular, radially to the inside, it being possible for the second supporting element (76) of the second intermediate plate (38), which second supporting element (76) can come into contact with the second pressure plate restoring spring (48), and/or the first supporting element (74) of the first intermediate plate (26), which first supporting element (74) can come into contact with the first pressure plate restoring spring (44), to be moved at least partially into the second intermediate plate restoring spring tapered portion (60) .

8. Multi-disc double clutch according to one of Claims 1 to 7, **characterized in that** the second pressure plate restoring spring (48) configures at least one second pressure plate restoring spring tapered portion (68) which is open, in particular, radially to the inside, and/or the second intermediate plate restoring spring (50) configures at least one second intermediate plate restoring spring tapered portion (60) which is open, in particular, radially to the inside, a first actuating element (70) which can move the first pressure plate (24) being guided through the second pressure plate restoring spring tapered portion (68) and/or the second intermediate plate restoring spring tapered portion (60), and/or the first pressure plate restoring spring (44) configures at least one first pressure plate restoring spring tapered portion (66) which is open, in particular, radially to the inside, and/or the first intermediate plate restoring spring (46) configures at least one first intermediate plate restoring spring tapered portion (58) which is open, in particular, radially to the inside, a second actuating element (72) which can move the second pressure plate (36) being guided through the first pressure plate restoring spring tapered portion (66) and/or the first intermediate plate restoring spring tapered portion (58).

9. Multi-disc double clutch according to one of Claims 1 to 8, **characterized in that** the first counterplate (22) and the second counterplate (34) are spaced apart from one another axially via an intermediate piece (32) which is fastened by the main connecting element (56), the first pressure plate restoring spring (44) and/or the first intermediate plate restoring spring (46) and/or the second pressure plate restoring spring (48) and/or the second intermediate plate restoring spring (50) being connected to the intermediate piece (32).

10. Multi-disc double clutch according to one of Claims 1 to 9, **characterized in that** a first connecting piece (62), in particular a step pin which runs substantially axially or a connecting plate which runs substantially in an angled-away manner in the circumferential direction, being connected to the first counterplate (22), and/or a second connecting piece (64), in particular a step pin which runs substantially axially or a connecting plate which runs substantially in an angled-away manner in the circumferential direction, being connected to the second counterplate (34), the first pressure plate restoring spring (44) and/or the first intermediate plate restoring spring (46) being connected to the first connecting piece (62), and/or the second pressure plate restoring spring (48) and/or the second intermediate plate restoring spring (50) being connected to the second connecting piece (64).

11. Multi-disc double clutch according to one of Claims 1 to 10, **characterized in that** the first intermediate plate restoring spring (46) is connected to the first intermediate plate (26) with the aid of a first supporting element (74) which can come into contact with the first pressure plate restoring spring (44), and/or the second intermediate plate restoring spring (50) is connected to the second intermediate plate (38) with the aid of a second supporting element (76) which can come into contact with the second pressure plate restoring spring (48), the first supporting element (74) and/or the second supporting element (76) being configured as a riveted connection, in particular.

## Revendications

1. Double embrayage à disques multiples pour le couplage d'un arbre d'entraînement (14) d'un moteur de véhicule automobile avec un premier arbre d'entrée de boîte de vitesses (16) et/ou un second arbre d'entrée de boîte de vitesses (20), avec un premier embrayage partiel (12) pour le couplage de l'arbre d'entraînement (14) avec le premier arbre d'entrée de boîte de vitesses (16) et un second embrayage partiel (18) pour le couplage de l'arbre d'entraînement (14) avec le second arbre d'entrée de boîte de vitesses (20),
**caractérisé en ce que**
le premier embrayage partiel (12) présente un premier contre-plateau (22), au moins un premier plateau intermédiaire (26) relié au premier contre-plateau (22) par un premier ressort de rappel de plateau intermédiaire (46) et déplaçable axialement par rapport au premier contre-plateau (22) et un premier plateau de pression (24) relié au premier contre-plateau (22) au moyen d'un premier ressort de rappel de plateau de pression (44) et déplaçable axialement par rapport au premier contre-plateau (22) et au premier plateau intermédiaire (26) pour presser des premières garnitures de friction (28) d'un premier disque d'embrayage (30) entre le premier contre-plateau (22) et le premier plateau intermédiaire (26) ainsi qu'entre le premier plateau intermédiaire (26) et le premier plateau de pression (24), et
le second embrayage partiel (18) présente un second contre-plateau (34), au moins un second plateau intermédiaire (38) relié au second contre-plateau (34) par un second ressort de rappel de plateau intermédiaire (50) et déplaçable axialement par rapport au second contre-plateau (34) et un second plateau de pression (36) relié au second contre-plateau (34) au moyen d'un second ressort de rappel de plateau de pression (48) et déplaçable axialement par rapport au second contre-plateau (34) et au second plateau intermédiaire (38) pour presser des secondes garnitures de friction (40) d'un second disque d'embrayage (42) entre le second contre-plateau (34) et le second plateau intermédiaire (38) ainsi qu'entre le second plateau intermédiaire (38) et le second plateau de pression (36), et
un élément d'assemblage principal (56), en particulier un assemblage rivé, assemblant sans rotation le premier contre-plateau (22) au second contre-plateau (34), dans lequel l'élément d'assemblage principal (56) est disposé de façon décalée en direction périphérique et/ou en direction radiale par rapport au premier ressort de rappel de plateau de pression (44), au premier ressort de rappel de plateau intermédiaire (46), au second ressort de rappel de plateau de pression (48) et au second ressort de rappel de plateau intermédiaire (50).

2. Double embrayage à disques multiples selon la revendication 1, **caractérisé en ce que** le premier ressort de rappel de plateau de pression (44) et le second ressort de rappel de plateau de pression (48) et/ou le premier ressort de rappel de plateau intermédiaire (46) et le second ressort de rappel de plateau intermédiaire (50) sont disposés essentiellement entièrement ou partiellement l'un derrière l'autre en direction axiale.

3. Double embrayage à disques multiples selon la revendication 1 ou 2, **caractérisé en ce que** le premier ressort de rappel de plateau de pression (44) et le second ressort de rappel de plateau intermédiaire (50) et/ou le second ressort de rappel de plateau de pression (48) et le premier ressort de rappel de plateau intermédiaire (46) sont disposés essentiellement entièrement ou partiellement l'un derrière l'autre en direction axiale.

4. Double embrayage à disques multiples selon l'une quelconque des revendications 1 à 3, **caractérisé en ce que** le premier ressort de rappel de plateau de pression (44) et le premier ressort de rappel de plateau intermédiaire (46) et/ou le second ressort de rappel de plateau de pression (48) et le second ressort de rappel de plateau intermédiaire (50) sont disposés essentiellement entièrement ou partiellement l'un derrière l'autre en direction axiale.

5. Double embrayage à disques multiples selon l'une quelconque des revendications 1 à 4, **caractérisé en ce que** le premier ressort de rappel de plateau de pression (44), le premier ressort de rappel de plateau intermédiaire (46), le second ressort de rappel de plateau de pression (48) et le second ressort de rappel de plateau intermédiaire (50) sont disposés essentiellement entièrement ou partiellement l'un derrière l'autre en direction axiale.

6. Double embrayage à disques multiples selon l'une quelconque des revendications 1 à 5, **caractérisé en ce qu'**un des ressorts de rappel (44, 46, 48, 50), considéré en direction axiale, recouvre essentiellement entièrement au moins un autre ressort de rappel (46, 48, 50, 44) et ne recouvre que partiellement encore un autre ressort de rappel (48, 50, 44, 46).

7. Double embrayage à disques multiples selon l'une quelconque des revendications 1 à 6, **caractérisé en ce que** le premier ressort de rappel de plateau intermédiaire (46) forme au moins un premier rétrécissement de ressort de rappel de plateau intermédiaire (58) en particulier ouvert radialement vers l'intérieur, dans lequel un premier élément d'appui (74) du premier plateau intermédiaire (26) applicable au premier ressort de rappel de plateau de pression (44) et/ou un second élément d'appui (76) du second plateau intermédiaire (38) applicable au second ressort de rappel de plateau de pression (48) peut être déplacé au moins partiellement dans le premier rétrécissement de ressort de rappel de plateau intermédiaire (58), et/ou le second ressort de rappel de plateau intermédiaire (50) forme au moins un second rétrécissement de ressort de rappel de plateau intermédiaire (60) en particulier ouvert radialement vers l'intérieur, dans lequel le second élément d'appui (76) du second plateau intermédiaire (38) applicable au second ressort de rappel de plateau de pression (48) et/ou le premier élément d'appui (74) du premier plateau intermédiaire (26) applicable au premier ressort de rappel de plateau de pression (44) est déplaçable au moins partiellement dans le second rétrécissement de ressort de rappel de plateau intermédiaire (60).

8. Double embrayage à disques multiples selon l'une quelconque des revendications 1 à 7, **caractérisé en ce que** le second ressort de rappel de plateau de pression (48) forme au moins un second rétrécissement de ressort de rappel de plateau de pression (68) en particulier ouvert radialement vers l'intérieur et/ou le second ressort de rappel de plateau intermédiaire (50) forme au moins un second rétrécissement de ressort de rappel de plateau intermédiaire (60) en particulier ouvert radialement vers l'intérieur, dans lequel un premier élément d'actionnement (70) pouvant déplacer le premier plateau de pression (24) est mené à travers le second rétrécissement de ressort de rappel de plateau de pression (68) et/ou à travers le second rétrécissement de ressort de rappel de plateau intermédiaire (60), et/ou le premier ressort de rappel de plateau de pression (44) forme au moins un premier rétrécissement de ressort de rappel de plateau de pression (66) en particulier ouvert radialement vers l'intérieur et/ou le premier ressort de rappel de plateau intermédiaire (46) forme au moins un premier rétrécissement de ressort de rappel de plateau intermédiaire (58) en particulier ouvert radialement vers l'intérieur, dans lequel un second élément d'actionnement (72) pouvant déplacer le second plateau de pression (36) est mené à travers le premier rétrécissement de ressort de rappel de plateau de pression (66) et/ou le premier rétrécissement de ressort de rappel de plateau intermédiaire (58).

9. Double embrayage à disques multiples selon l'une quelconque des revendications 1 à 8, **caractérisé en ce que** le premier contre-plateau (22) et le second contre-plateau (34) sont espacés axialement l'un de l'autre au moyen d'une pièce intermédiaire (32) fixée par l'élément d'assemblage principal (56), dans lequel le premier ressort de rappel de plateau de pression (44) et/ou le premier ressort de rappel de plateau intermédiaire (46) et/ou le second ressort de rappel de plateau de pression (48) et/ou le second ressort de rappel de plateau intermédiaire (50) est relié à la pièce intermédiaire (32).

10. Double embrayage à disques multiples selon l'une quelconque des revendications 1 à 9, **caractérisé en ce qu'**une première pièce de liaison (62), en particulier un boulon étagé s'étendant essentiellement axialement ou une tôle de liaison essentiellement coudée en direction périphérique est assemblée au premier contre-plateau (22), et/ou une seconde pièce de liaison (64), en particulier un boulon étagé s'étendant essentiellement axialement ou une tôle de liaison essentiellement coudée en direction périphérique est assemblée au second contre-plateau (34), dans lequel le premier ressort de rappel de plateau de pression (44) et/ou le premier ressort de rappel de plateau intermédiaire (46) est relié à la première pièce de liaison (62) et/ou le second ressort de rappel de plateau de pression (48) et/ou le second ressort de rappel de plateau intermédiaire (50) est relié à la seconde pièce de liaison (64).

11. Double embrayage à disques multiples selon l'une quelconque des revendications 1 à 10, **caractérisé en ce que** le premier ressort de rappel de plateau intermédiaire (46) est relié au premier plateau intermédiaire (26) à l'aide d'un premier élément d'appui (74) applicable au premier ressort de rappel de plateau de pression (44) et/ou le second ressort de rappel de plateau intermédiaire (50) est relié au second plateau intermédiaire (38) à l'aide d'un second élément d'appui (76) applicable au second ressort de rappel de plateau de pression (48), dans lequel en particulier le premier élément d'appui (74) et/ou le second élément d'appui (76) est constitué par un assemblage rivé.
